# EUROPÄISCHE PATENTSCHRIFT

(11) **EP 2 913 603 B1**
(45) Veröffentlichungstag und Bekanntmachung des Hinweises auf die Patenterteilung: **01.04.2020**
(21) Anmeldenummer: 15157052.0
(22) Anmeldetag: 27.02.2015
(51) Int. Cl.: F24F 13/30, F24F 3/147, F24F 12/00, F28D 9/00, F28D 11/02, F28D 21/00

(54) **Rekuperator und Verfahren zum Betrieb eines Rekuperators**
recuperator and method of operating the same
Récupérateur et procédé pour opérer un récupérateur

(30) Priorität: 27.02.2014 DE 102014102640
(43) Veröffentlichungstag der Anmeldung: 02.09.2015
(73) Patentinhaber: Vasco Group nv, 3650 Dilsen (BE)
(72) Erfinder: Romijn, Adriaan, verstorben (BE)
(74) Vertreter: Schrooten, Rolf

(56) Entgegenhaltungen:
- WO-A1-03/098120
- WO-A1-2010/128522
- DE-A1- 19 521 542

## Beschreibung

Die vorliegende Erfindung betrifft einen Rekuperator nach dem Oberbegriff von Anspruch 1. Derartige Rekuperatoren, die für die beiden Gasströme durch wärmedurchlässige Wände voneinander getrennte Räume bzw. Kanäle aufweisen, dienen dazu, thermische Energie, die sowohl als fühlbare als auch als latente Wärme vorliegen kann, von einem warmen Gasstrom auf einen kalten Gasstrom zu übertragen.

Ein bevorzugtes Einsatzgebiet dieser Rekuperatoren bilden dabei Lüftungssysteme für Gebäude, die Außenluft zur Belüftung des Gebäudes ansaugen und Abluft aus dem Gebäude nach außen abführen. Da die Abluft in der Regel wärmer ist als die zugeführte Außenluft, dient der Rekuperator zur Wärmerückgewinnung, indem zumindest ein Teil der Wärme des abgeführten Luftstroms zur Erwärmung des zugeführten Kaltluftstroms genutzt wird (Winterbetrieb). Ferner können derartige Rekuperatoren bei höheren Außentemperaturen auch zur Kühlung von Gebäuden beitragen, indem zumindest ein Teil der Wärme der zur Belüftung des Gebäudes angesaugten Außenluft dann auf die aus dem Gebäude nach außen abgeführte Abluft übertragen wird (Sommerbetrieb).

Bei herkömmlichen Rekuperatoren wird mit der Abluft auch die darin enthaltene Feuchtigkeit aus dem Gebäude abgeführt, was insbesondere im Winter bei trockener Außenluft zu einem Absinken der relativen Luftfeuchtigkeit im Gebäude führt. Da dies mit Nachteilen für das Wohlbefinden und die Gesundheit von Gebäudebewohnern sowie mit Beschädigungen von Einrichtungen insbesondere aus Holz verbunden ist, sind entgegenwirkende Maßnahmen wie der beispielsweise der Einsatz von Luftbefeuchtern bekannt, die aber mit weiteren Nachteilen wie zusätzlichem Energieverbrauch einhergehen.

Aus der EP 1 485 657 B1 bzw. der entsprechenden DE 603 04 321 T2, von der die vorliegende Erfindung im Oberbegriff von Anspruch 1 ausgeht, ist ein Wärme-Rekuperator bekannt, der sowohl fühlbare als auch latente Wärme übertragen kann und dabei auch eine Regelung des Feuchte-Austauschs ermöglicht. Dazu werden die beiden Luftströme abwechselnd durch zwei Gruppen von Kanälen des Rekuperators geleitet, so dass die Feuchtigkeit, die während des Abführens aus dem Gebäude in einer Kanalgruppe kondensiert, bei einer anschließenden Verwendung dieser Kanalgruppe für die zuströmende Außenluft wieder verdampft und hierdurch mit dem zugeführten Luftstrom wieder in das Gebäude hineingelangt.

Auf diese Weise kann im Winter das nachteilige Absinken und im Sommer das ebenfalls nachteilige Ansteigen der relativen Luftfeuchtigkeit im Gebäude verhindert oder zumindest reduziert werden.

Außerdem kann hierdurch im Winter auch ein Frostschutz realisiert werden, der bei sehr geringen Außentemperaturen das Zufrieren des Rekuperators durch Eisbildung infolge der kondensierten Feuchtigkeit verhindert.

Jede Gruppe von Kanälen des Rekuperators ist in an sich von Wärmetauschern bekannter Weise jeweils durch eine Vielzahl von sehr kleinen Kanälen gebildet, um die bei der Wärmeübertragung wirksame Kanal-Oberfläche entsprechend zu vergrößern.

Um beim Betrieb des Rekuperators in den beiden sich abwechselnden Betriebspositionen die abwechselnde Leitung der Luftströme durch die Kanäle zu erreichen, werden allerdings Umschaltmittel benötigt, die hier eine Mehrzahl von Ventilen umfassen, welche zwischen den vier Anschlüssen und den Kanälen angeordnet sind. Hierdurch ergibt sich ein relativ komplexer Aufbau mit verschiedenen Ventilklappen und mehreren Stellantrieben. Schon beim Ausfall nur eines Antriebsorgans kann die Funktion des Rekuperators beeinträchtigt sein. Außerdem können die Ventilklappen auch im geöffneten Zustand noch ein Hindernis für die Luftströme darstellen.

Die DE 195 21 542 A1 offenbart einen Rekuperator mit den Merkmalen des Oberbegriffs von Anspruch 1. Dabei ist das Umschaltaggregat als Drehorgan ausgestaltet, welches die Luftwege zwischen einem zentralen Wärmetauscher und vier Anschlüssen für Zuluft, Abluft, Fortluft und Frischluft umschaltet.

Aufgabe der vorliegenden Erfindung ist es daher, einen preiswert herzustellenden Rekuperator der eingangs genannten Art zu schaffen, der eine einfache Konstruktion und eine hohe Zuverlässigkeit aufweist.

Diese Aufgabe wird erfindungsgemäß durch einen Rekuperator nach Anspruch 1 sowie durch ein Verfahren nach Anspruch 14 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass die Umschaltmittel eine um eine Rotationsachse drehbar gelagerte Trommel umfassen, in welcher die erste Gruppe von Kanälen und die zweite Gruppe von Kanälen verlaufen, wobei die Trommel sowohl in eine erste Trommelposition positionierbar ist, die der ersten Betriebsposition der beiden Gruppen von Kanälen entspricht, als auch in eine zweite Trommelposition positionierbar ist, die der zweiten Betriebsposition der beiden Gruppen von Kanälen entspricht, und dass die erste Gruppe von Kanälen (11) und die zweite Gruppe von Kanälen (12) sich als zentraler Wärmetauscher (10) im Inneren der Trommel (8) befinden, wobei die Vielzahl der voneinander durch wärmeleitende Wände getrennten Kanäle der beiden Kanalgruppen (11) und (12) des zentralen Wärmetauschers (10) einander entgegengerichtet durchströmbar sind.

Es werden dabei also die beiden Gruppen von Kanälen des Rekuperators relativ zu den übrigen Komponenten des Rekuperators in ihrer räumlichen Lage verstellt. So können die beiden Gruppen von Kanälen an beiden Endbereichen jeweils abwechselnd mit verschiedenen der vier Anschlüsse des Rekuperators verbunden werden, welche dem Zuführen und Abführen der beiden Luftströme dienen. Beide Gruppen von Kanälen können so abwechselnd von einem der beiden Gasströme und/oder in wechselnder Richtung durchströmt werden.

Der Hauptvorteil liegt dabei darin, dass nur eine einzige Verstellbewegung und somit auch nur ein einziger Stellantrieb für die Umschaltmittel erforderlich ist. Hierdurch wird nicht nur die Konstruktion, sondern insbesondere auch die Steuerung des Gerätes vereinfacht. Außerdem wird auch die Fehleranfälligkeit erheblich reduziert, was zu einer höheren Betriebssicherheit führt.

Auf diese konstruktiv besonders einfache Bauweise wird zudem ein Rekuperator geschaffen, der nicht nur besonders kostengünstig herstellbar ist, sondern der auch leicht zu montieren und zu warten und insgesamt einfach handzuhaben ist.

Dabei bleiben die weiteren Vorteile eines der EP 1 485 657 B1 entsprechenden Rekuperators erhalten. So ermöglicht der erfindungsgemäße Rekuperator insbesondere eine gute und hochgenaue Regelbarkeit der Feuchtigkeit des Raumklimas im Gebäudeinneren sowie einen integrierten Frostschutz, der das Einfrieren des Rekuperators auch bei Außentemperaturen unter dem Gefrierpunkt verhindert.

Von Vorteil ist es, wenn die erste Trommelposition gegenüber der zweiten Trommelposition um einen Winkel von 180° verdreht ist. Dadurch wird sowohl eine Vertauschung der beiden Kanalgruppen für die beiden Gasströme als auch eine Umkehr der Strömungsrichtung in jeder Kanalgruppe erreicht, wodurch die Vorteile des erfindungsgemäßen Rekuperators besonders stark wirksam werden. Vorteilhafterweise ist die Trommel dabei bezüglich ihrer Rotationsachse achsensymmetrisch ausgebildet.

Besonders vorteilhaft ist es ferner, wenn die Trommel in jeder Stirnseite jeweils mindestens zwei voneinander getrennte Öffnungen aufweist, die gleichmäßig über den Kreisumfang verteilt sind. Dabei sind die sich hierbei in beiden Stirnseiten insgesamt ergebenden vier Öffnungen jeweils mit einem der beiden Endbereiche von einer der beiden Kanalgruppen verbunden. Die beiden Gruppen von Kanälen münden also mit ihren Endbereichen in den Stirnseiten der Trommel.

Günstig ist es dabei, wenn die in den Stirnseiten der Trommel angeordneten Öffnungen jeweils über einen in dem Gehäuse der Trommel ausgebildeten und einen Gasstrom leitenden Sammelraum mit einem Endbereich einer Gruppe von Kanälen verbunden sind. Die beiden Gruppen von Kanälen münden auf diese Weise also jeweils mittelbar in den Stirnseiten der Trommel.

Gemäß einer besonders bevorzugten Ausführungsform der Erfindung wird vorgeschlagen, die Trommel in axialer Richtung zwischen zwei ortsfesten und insbesondere scheibenförmig ausgebildeten Lagerelementen zu lagern und diesen gegenüber stirnseitig abzudichten. Jedes Lagerelement weist dabei zur Durchführung der Gasströme zwei Leitungsstücke oder Durchgangsöffnungen auf, die auf der von der Trommel angewandten Seite über weitere Leitungselemente oder über als Leitung dienende Innenräume des Rekuperatorgehäuses mit jeweils einem der vier Anschlüsse des Rekuperators verbunden sind. Die zwei Leitungsstücke oder Durchgangsöffnungen in jedem Lagerelement sind dabei um einen Verdrehwinkel von 180° zueinander versetzt. Die Drehachse der vorzugsweise kreiszylindrisch ausgebildeten Trommel verläuft dabei senkrecht zu den Kontaktflächen der beiden Lagerelemente.

Besonders vorteilhaft ist es dabei, wenn die mindestens zwei in den Stirnseiten der Trommel vorgesehenen Öffnungen und die zwei in jedem Lagerelement ausgebildeten Durchgangsöffnungen zumindest größtenteils miteinander fluchten, wenn sich die Trommel in einer der beiden Trommelpositionen befindet, die der ersten und der zweiten Betriebsposition der beiden Gruppen von Kanälen entsprechen.

Nach einer weiteren besonders bevorzugten Ausführungsform der Erfindung ist vorgesehen, dass jede stirnseitige Öffnung der Trommel und der jeweils hinter der Stirnseite liegende, mit dieser Öffnung verbundene Sammelraum der Trommel durch ein vorzugsweise wandförmiges Trennelement in jeweils zwei Teilbereiche unterteilt wird. Auf diese Weise ergeben sich dann in jeder Stirnseite jeweils mindestens vier Öffnungen oder Teilöffnungen, die gleichmäßig über den Kreisumfang verteilt angeordnet sind.

Besonders vorteilhaft ist es dabei, wenn die Trommel zusätzlich auch in mindestens eine dritte Trommelposition verstellt werden kann, die gegenüber der ersten und zweiten Trommelposition jeweils um einen Verdrehwinkel von 90° versetzt ist. Auch in dieser dritten Position liegen dann wieder alle vier in den Stirnseiten der Trommel ausgebildeten Öffnungen bzw. Teilöffnungen an jeweils einem entsprechenden Öffnungsquerschnitt der gegenüberliegenden Kontaktfläche des Lagerelements an.

Jeder der beiden Gasströme wird bei dieser Trommelposition in oder vor dem ersten Lagerelement in zwei Teilströme aufgeteilt, von denen ein Teilstrom durch die Hälfte aller Kanäle der ersten Kanalgruppe geführt wird, während der andere Teilstrom durch die Hälfte aller Kanäle der zweiten Kanalgruppe strömt. In oder hinter dem zweiten Lagerelement werden die beiden Teilströme dann wieder zusammengeführt. Insgesamt gibt es hierbei keinen wärmeübertragenden Kontakt mit dem anderen Gasstrom. Auf diese Weise kann somit eine besonders einfache Bypass-Funktion realisiert werden, die weder eine zusätzliche Leitung noch zusätzliche Ventile benötigt.

Gemäß einer alternativen Ausführungsform der Erfindung kann die Trommel auch kreiszylinderförmig ausgebildet und in einer Bohrung eines feststehenden Aufnahmeelements gelagert sein, wobei die in der Trommel verlaufenden Kanäle über Öffnungspaare, die jeweils in der Mantelfläche der Trommel und in der Wandfläche der die Trommel umgebenden Bohrung des Aufnahmeelements vorgesehen sind, mit Strömungsleitungen verbunden werden können, welche mit jeweils einem Anschluss des Rekuperators verbunden sind. Die einzelnen Kanäle verlaufen hierbei jeweils in einer zumindest im Wesentlichen senkrecht zur Drehachse der Trommel liegenden Ebene.

Eine besonders einfache Steuerung des erfindungsgemäßen Rekuperators kann dadurch erreicht werden, dass Steuermittel vorgesehen sind, durch die die Trommel in Abhängigkeit von einer fest vorgegebenen oder frei einstellbaren Zeitdauer mittels eines Verstellmotors verdreht wird. So kann beispielsweise alle 10 oder 30 Minuten die Trommelposition verstellt werden, um die Durchströmungen der Kanäle zu vertauschen.

Eine besonders gute Regelbarkeit des Raumklimas im Gebäude kann außerdem dadurch erreicht werden, dass Steuermittel oder Regelmittel vorgesehen sind, durch die die Umschaltmittel in Abhängigkeit von mindestens einem durch entsprechende Messmittel erfassbaren Parameter automatisch betätigt werden. So kann beispielsweise die Temperatur und/oder ein absoluter oder relativer Luftfeuchtigkeitswert gemessen werden und beim Erreichen vorgegebener oder einstellbarer Grenzwerte die Trommel mittels eines Verstellmotors entsprechend verdreht werden.

Besonders vorteilhaft ist es, wenn dem ersten oder zweiten Anschluss ein erster Ventilator und dem dritten oder vierten Anschluss ein zweiter Ventilator zugeordnet ist. So ist die Strömung der beiden Gasströme jeweils in der gewünschten Weise einstellbar.

Wenn der erfindungsgemäße Rekuperator dabei als Bestandteil eines Lüftungssystems an einem Gebäude eingesetzt wird, ist es besonders vorteilhaft, wenn ein Ventilator zwischen der Trommel und dem gebäudeseitigen Einlass und der zweite Ventilator zwischen der Trommel und dem gebäudeseitigen Auslass angeordnet ist, da auf diese Weise die Energieverluste der Ventilatoren dem Gebäude zugeführt werden können.

Die vorliegende Erfindung betrifft auch ein entsprechendes Verfahren zum Betrieb eines Rekuperators, welcher insbesondere nach dem Oberbegriff von Anspruch 1 ausgebildet ist. Wesentlich bei diesem Verfahren ist, dass die Gruppen von Kanälen zwischen den Anschlüssen intermittierend derart um eine gemeinsame Rotationsachse gedreht werden, dass sie an ihren beiden Endbereichen abwechselnd mit jeweils einem von mindestens zwei verschiedenen Anschlüssen verbunden sind, und dass die erste Gruppe von Kanälen (11) und die zweite Gruppe von Kanälen (12) sich als zentraler Wärmetauscher (10) im Inneren der Trommel (8) befinden, wobei die Vielzahl der voneinander durch wärmeleitende Wände getrennten Kanäle der beiden Kanalgruppen (11) und (12) des zentralen Wärmetauschers (10) einander entgegengerichtet durchströmt werden.

Hierdurch kann auf besonders einfache Weise ein hoher Wirkungsgrad des Rekuperators erreicht werden, der sowohl die fühlbare als auch die latente Wärme ausnützt. Auch kann die Feuchtigkeit der im Inneren eines Gebäudes mit diesem Verfahren besonders gut und genau geregelt werden und es wird auch im Winter stets ein frostgeschützter Betrieb des Rekuperators ermöglicht.

Weitere Vorteile und Merkmale der Erfindung ergeben sich aus der nachfolgenden Beschreibung und den in den Zeichnungen dargestellten Ausführungsbeispielen. Es zeigen:
- Figur 1:: eine schematische Darstellung einer ersten Ausführungsvariante eines erfindungsgemäßen Rekuperators in einer ersten Trommelposition,
- Figur 2:: schematische Darstellung des Rekuperators aus Figur 1 in einer zweiten Trommelposition,

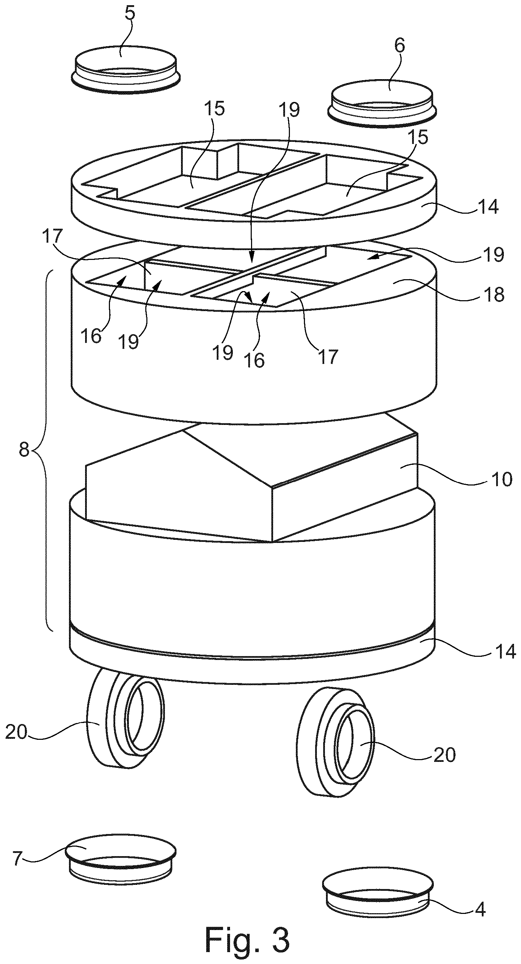

- Figur 3:: vergrößerte und teilweise auseinander gezogene Darstellung des Trommelbereichs aus Figur 1,
- Figur 4a-4d:: schematische Darstellung der Verstellung der Trommel des Rekuperators aus Figur 1, und
- Figur 5:: schematische Darstellung einer Bypass-Position des Rekuperators aus Figur 1.

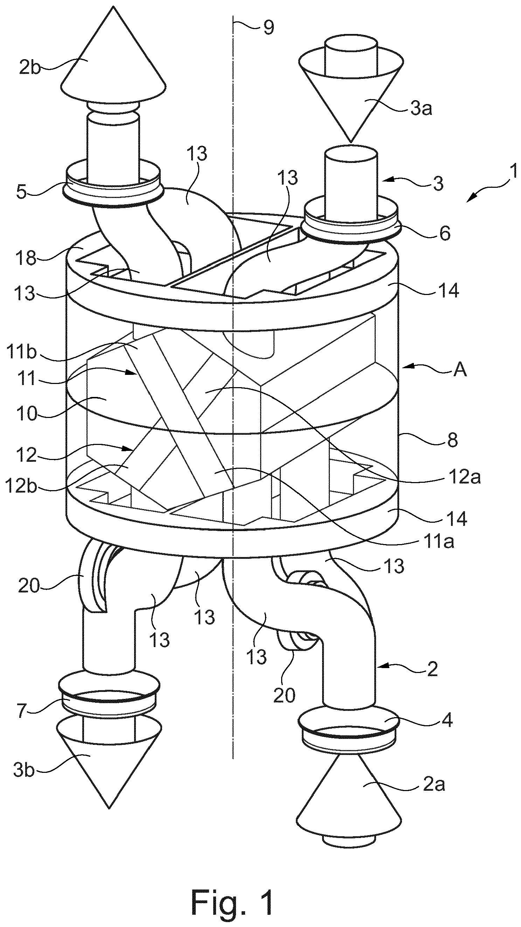

In Figur 1 ist neben den wesentlichen Bestandteilen eines als Bestandteil einer Lüftungsanlage an einem Gebäude eingesetzten erfindungsgemäßen Rekuperators 1 auch der Strömungsweg der beiden Luftströme 2 und 3 dargestellt. Dabei ist das Bezugszeichen 2a dem warmen aus dem Gebäude zugeführten Abluftstrom und das Bezugszeichen 3a dem kalten von außen zugeführten Luftstrom zugeordnet. Nach dem Passieren des Rekuperators 1 wird der abgekühlte Abluftstrom 2b an die Umgebung abgegeben, während der erwärmte Zuluftstrom 3b in das Gebäudeinnere geführt wird (Winterbetrieb).

Dabei tritt der zugeführte erste Luftstrom 2a durch einen ersten Anschluss 4 in den Rekuperator 1 ein und durch einen zweiten Anschluss 5 wieder aus dem Rekuperator 1 aus. In entsprechender Weise wird der zweite Luftstrom 3a durch einen dritten Anschluss 6 in den Rekuperator 1 hinein und durch einen vierten Anschluss 7 wieder aus dem Rekuperator 1 heraus geführt.

Zwischen diesen vier Anschlüssen 4, 5, 6, 7 ist eine kreiszylinderförmige Trommel 8 angeordnet, die von einem hier nicht näher dargestellten Antriebsmittel um eine hier vertikal gelagerte Rotationsachse 9 gedreht werden kann. Im Inneren der Trommel 8 befinden sich der zentrale Wärmetauscher 10 mit der Vielzahl der voneinander durch wärmeleitende Wände getrennten Kanälen der beiden Kanalgruppen 11 und 12, die einander entgegengerichtet durchströmt werden. Die Gesamtheit der einzelnen Kanäle der ersten Kanalgruppe 11 und die Gesamtheit der einzelnen Kanäle der zweiten Kanalgruppe 12 sind in den Figuren 1, 2 und 5 aber jeweils nur durch einen einzigen schräg zur Rotationsachse 9 orientierten Streifen angedeutet.

In dem dargestellten Ausführungsbeispiel werden die beiden zugeführten Luftströme 2a und 3a zwischen den Anschlüssen 4, 6 und der Trommel 8 in Leitungsräumen, die in dem hier nicht dargestellten Gehäuse des Rekuperators 1 vorgesehen sind, in jeweils zwei Teilströme 13 aufgeteilt, welche nach dem Durchströmen der Trommel 8 vor den beiden Anschlüssen 5 und 7 in entsprechenden Sammelräumen des Rekuperators 1 wieder zu jeweils einem Abluftstrom 2b, 3b zusammengeführt werden.

Die Trommel 8 ist axial zwischen zwei relativ zum Rekuperator 1 ortsfesten scheibenförmigen Lagerelementen 14 gelagert und diesen gegenüber stirnseitig abgedichtet. In jedem Lagerelement 14 sind zwei große, eckig ausgeführte Durchgangsöffnungen 15 ausgebildet auf, die auf der von der Trommel 8 abgewandten Seite über weitere Leitungsräume im Rekuperatorgehäuse mit jeweils einem der vier Anschlüsse 4, 5, 6, 7 des Rekuperators 1 verbunden sind. Jede der beiden Durchgangsöffnungen 15, die relativ zueinander bezüglich der Rotationsachse 7 um einen Winkel von um 180° versetzt sind, wird dabei von zwei Teilströmen 13 durchströmt.

Die in dem zentralen Wärmetauscher 10 verlaufenden Kanäle der beiden Kanalgruppen 11 und 12 münden an beiden Endbereichen jeweils in einen stirnseitig offenen Sammelraum 16, der durch eine mittige Trennwand 17 in zwei gleichgroße Teilräume unterteilt ist. Diese Trennwand 17 erstreckt sich von dem Wärmetauscher 10 bis zu der jeweiligen Stirnseite 18 der Trommel 8, so dass in der Stirnseite 18 insgesamt vier rechteckige Öffnungen 19 ausgebildet sind, die relativ zueinander um jeweils 90° versetzt sind. Durch jede dieser vier Teilöffnungen 19 geht einer der insgesamt vier Teilströme 13 hindurch.

Die vier Teilöffnungen 19 liegen in der in Figur 1 dargestellten ersten Trommelposition A jeweils einem Teilbereich der Durchgangsöffnung 15 in der jeweils zugehörigen Anlagefläche des Lagerelements 14 gegenüber.

Nach einer Drehung der Trommel 8 um 90° liegt jede Teilöffnung 19 der Trommel 8 einem anderen Teilbereich der gleichen oder der anderen Durchgangsöffnung 15 in einem Lagerelement 14 gegenüber.

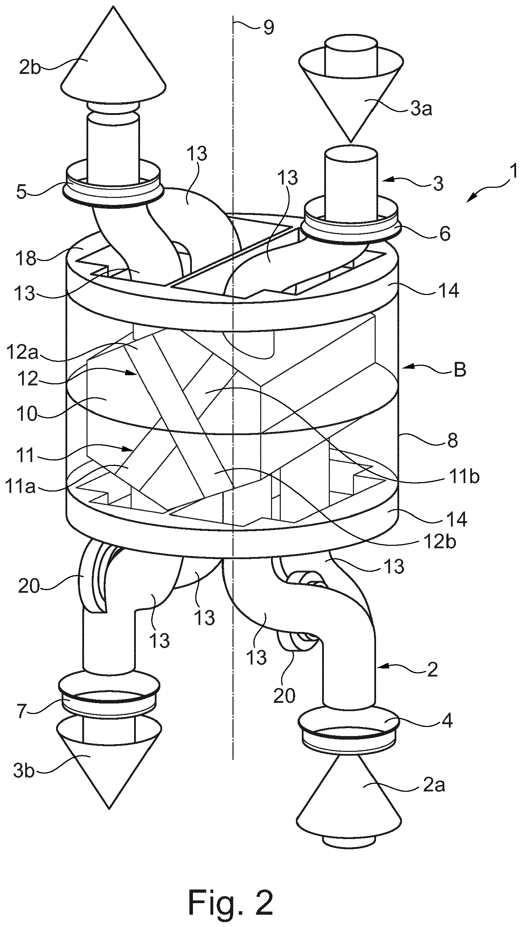

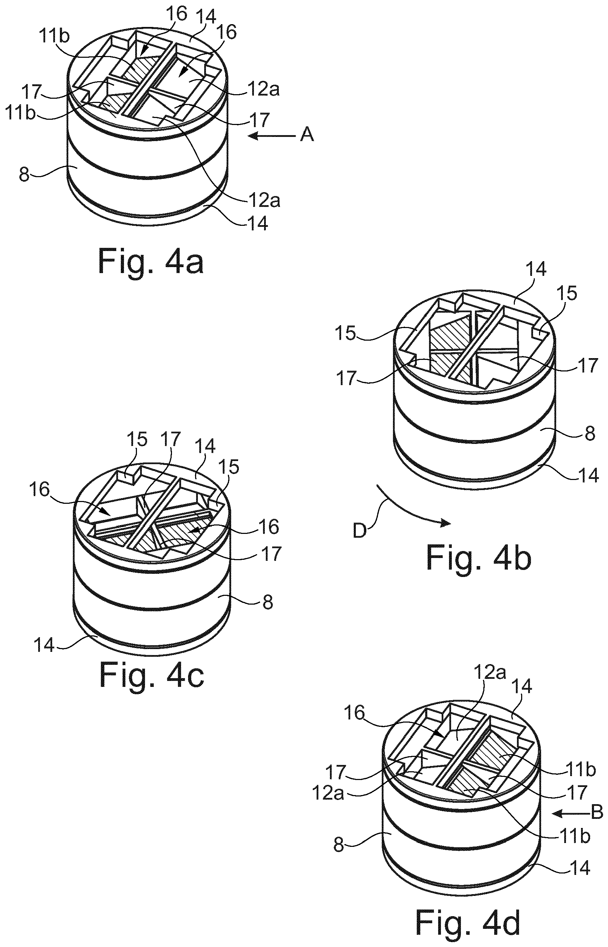

In der in Figur 1 dargestellten Trommelposition A, die auch Figur 4a entspricht, strömt der erste Luftstrom 2 durch die Kanalgruppe 11, während der zweite Luftstrom 3 durch die Kanalgruppe 12 strömt. Nach einer Drehung D der Trommel 8 (Figuren 4b und 4c) um 180° in die in den Figuren 2 und Figur 4d dargestellte zweite Trommelposition B strömen beide Luftströme 2, 3 durch die jeweils andere Kanalgruppe 12, 11, wobei jeder Kanal der Gruppen 11, 12 auch noch in umgekehrter Richtung von dem jeweils anderen Luftstrom 3, 2 durchströmt wird. Auf diese Weise kann Feuchtigkeit des abgeführten Luftstroms 2, die während der Trommelposition A in den Kanälen der Gruppe 11 kondensiert, nach einer Umschaltung der Trommel 8 in die Trommelposition B in den Luftstrom 3 verdampfen, der nun durch die Kanäle der Gruppe 11 zugeführt wird, so dass die Feuchtigkeit wieder in das Gebäudeinnere zurückgeführt wird.

Die Trommelposition A entspricht einer ersten Betriebsposition des Rekuperators 1, in welcher der erste Endbereich 11a der ersten Gruppe 11 von Kanälen leitungsmäßig mit dem ersten Anschluss 4 und der zweite Endbereich 11b dieser ersten Gruppe 11 von Kanälen mit dem zweiten Anschluss 5 verbunden ist, während der erste Endbereich 12a der zweiten Gruppe 12 von Kanälen mit dem dritten Anschluss 6 und der zweite Endbereich 12b dieser zweiten Gruppe 12 von Kanälen mit dem vierten Anschluss 7 verbunden ist.

Demgegenüber entspricht die Trommelposition B einer zweiten Betriebsposition des Rekuperators 1, in welcher der erste Endbereich 11a der ersten Gruppe 11 von Kanälen leitungsmäßig mit dem vierten Anschluss 7 und der zweite Endbereich 11b dieser ersten Gruppe 11 von Kanälen mit dem dritten Anschluss 6 verbunden ist, während der erste Endbereich 12a der zweiten Gruppe 12 von Kanälen mit dem zweiten Anschluss 5 und der zweite Endbereich 12b dieser zweiten Gruppe 12 von Kanälen mit dem ersten Anschluss 4 verbunden ist.

Zur Förderung der Luftströme 2 und 3 sind zwei Ventilatoren 20 vorgesehen, die jeweils gebäudeinnenseitig angeordnet sind. So befindet sich der Ventilator 20 für den aus dem Gebäude abgeführten Luftstrom 2a zwischen der Trommel 8 und dem ersten Anschluss 4, während der Ventilator 20 für den dem Gebäude zugeführten Luftstrom 3b zwischen der Trommel 8 und dem vierten Anschluss 7 angebracht ist.

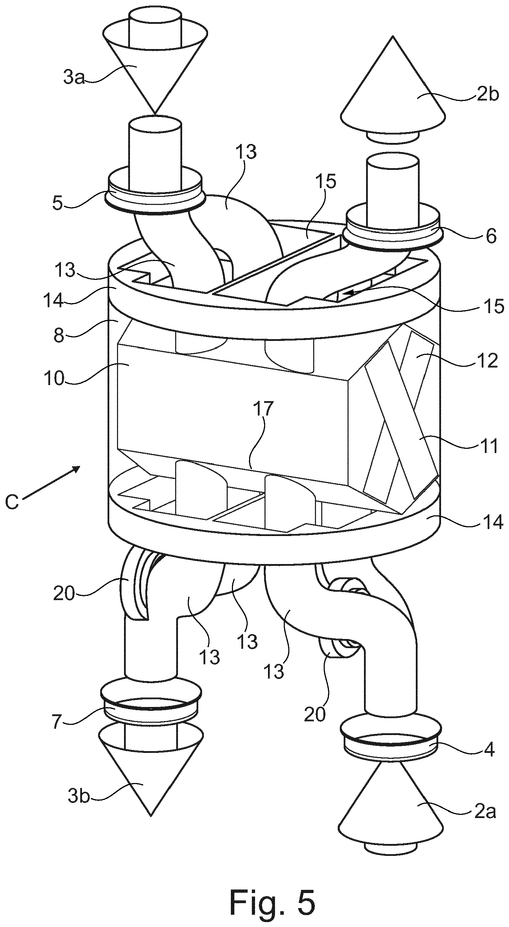

In Figur 5 ist eine Zwischenposition C dargestellt, in der die Trommel 8 nur um 90° gegenüber den beiden Trommelpositionen A und B verdreht ist. Einer der beiden Teilströme 13 wird dabei durch die Hälfte aller Kanäle der ersten Kanalgruppe 11 geführt, während der zugehörige zweite Teilstrom 13 durch die Hälfte aller Kanäle der zweiten Kanalgruppe 12 strömt. Da hierbei die Kanäle der beiden Kanalgruppen 11 und 12 nur von zwei Teilströmen 13 ein und desselben Luftstroms 2 oder 3 durchströmt werden, erfolgt in dem zentralen Wärmetauscher 10 kein Wärmeübergang von dem wärmeren Luftstrom 2 auf den kälteren Luftstrom 3. Diese Zwischenposition C stellt somit eine Bypass-Funktion bereit, die auf besonders einfache Weise ohne zusätzliche Leitungen oder Ventile ermöglicht wird.

## Patentansprüche

1. Rekuperator (1) zur Übertragung von thermischer Energie von einem ersten Gasstrom (2) zu einem zweiten Gasstrom (3), umfassend:
- mindestens einen ersten Anschluss (4), durch den der erste Gasstrom (2) dem Rekuperator (1) zuführbar ist,
- mindestens einen zweiten Anschluss (5), durch den der erste Gasstrom (2) aus dem Rekuperator (1) abführbar ist,
- mindestens einen dritten Anschluss (6), durch den der zweite Gasstrom (3) dem Rekuperator (1) zuführbar ist,
- mindestens einen vierten Anschluss (7), durch den der zweite Gasstrom (3) aus dem Rekuperator (1) abführbar ist,
- eine erste Gruppe (11) von Kanälen mit zwei Endbereichen (11a, 11b), wobei in einer ersten Betriebsposition der erste Endbereich (11a) mit dem ersten Anschluss (4) und der zweite Endbereich (11b) mit dem zweiten Anschluss (5) verbunden ist, und wobei in einer zweiten Betriebsposition der erste Endbereich (11a) mit dem vierten Anschluss (7) und der zweite Endbereich (11b) mit dem dritten Anschluss (6) verbunden ist,
- eine zweite Gruppe (12) von Kanälen mit zwei Endbereichen (12a, 12b), wobei in einer ersten Betriebsposition der erste Endbereich (12a) mit dem dritten Anschluss (6) und der zweite Endbereich (12b) mit dem vierten Anschluss (7) verbunden ist, und wobei in einer zweiten Betriebsposition der erste Endbereich (12a) mit dem zweiten Anschluss (5) und der zweite Endbereich (12b) mit dem ersten Anschluss (4) verbunden ist,
- mindestens ein Umschaltmittel, durch welches die Gruppen (11, 12) von Kanälen jeweils von der ersten Betriebsposition in die zweite Betriebsposition oder umgekehrt umschaltbar sind,
wobei die Umschaltmittel eine um eine Rotationsachse (9) drehbar gelagerte Trommel (8) umfassen, in welcher die erste Gruppe von Kanälen (11) und die zweite Gruppe von Kanälen (12) verlaufen,
wobei die Trommel (8) in eine erste Trommelposition (A) drehbar ist, die der ersten Betriebsposition der Gruppen von Kanälen (11, 12) entspricht,
und wobei die Trommel (8) in eine zweite Trommelposition (B) drehbar ist, die der zweiten Betriebsposition der Gruppen von Kanälen (11, 12) entspricht, **dadurch gekennzeichnet,**
**dass** die erste Gruppe von Kanälen (11) und die zweite Gruppe von Kanälen (12) sich als zentraler Wärmetauscher (10) im Inneren der Trommel (8) befinden, wobei die Vielzahl der voneinander durch wärmeleitende Wände getrennten Kanäle der beiden Kanalgruppen (11) und (12) des zentralen Wärmetauschers (10) einander entgegengerichtet durchströmbar sind.

2. Rekuperator (1) nach Anspruch 1, **dadurch gekennzeichnet, dass** die erste Trommelposition (A) gegenüber der zweiten Trommelposition (B) um einen Verdrehwinkel von 180° versetzt ist.

3. Rekuperator (1) nach Anspruch 1 oder 2, **dadurch gekennzeichnet, dass** die Trommel (8) in jeder Stirnseite (18) jeweils mindestens zwei Öffnungen (19) aufweist, die jeweils mit einem Endbereich (11a, 11b, 12a, 12b) von einer der beiden Gruppen (11, 12) von Kanälen verbunden sind.

4. Rekuperator (1) nach Anspruch 3, **dadurch gekennzeichnet, dass** die in den Stirnseiten (18) der Trommel (8) angeordneten Öffnungen (19) jeweils über einen im Inneren der Trommel (8) ausgebildeten Sammelraum (16) mit einem Endbereich (11a, 11b, 12a, 12b) einer Gruppe (11, 12) von Kanälen verbunden sind.

5. Rekuperator (1) nach Anspruch 3 oder 4, **dadurch gekennzeichnet, dass** die Trommel (8) in axialer Richtung zwischen zwei relativ zum Rekuperator (1) feststehenden Lagerelementen (14) gelagert und diesen gegenüber stirnseitig abgedichtet ist, wobei die Lagerelemente (14) jeweils zwei Durchgangsöffnungen (15) aufweisen, die über Leitungselemente mit jeweils einem Anschluss (4, 5, 6, 7) des Rekuperators (1) verbunden sind.

6. Rekuperator (1) nach Anspruch 5, **dadurch gekennzeichnet, dass** die mindestens zwei stirnseitigen Öffnungen (19) der Trommel (8) und die zwei Durchgangsöffnungen (15) der beiden Lagerelemente (14) in den beiden Trommelpositionen (A, B) zumindest zu einem überwiegenden Teil miteinander fluchten.

7. Rekuperator (1) nach einem der Ansprüche 3 bis 6, **dadurch gekennzeichnet, dass** die stirnseitigen Öffnungen (19) der Trommel (8) und die hiermit verbundenen Sammelräume (16) durch zumindest ein Trennelement (17) derart in jeweils mindestens zwei Teilbereiche unterteilt sind, dass in jeder Stirnseite (18) jeweils mindestens vier Öffnungen (19) ausgebildet sind.

8. Rekuperator (1) nach Anspruch 7, **dadurch gekennzeichnet, dass** die Trommel (8) in mindestens eine dritte Trommelposition (C) verstellbar ist, die gegenüber der ersten und zweiten Trommelposition (A, B) jeweils um einen Verdrehwinkel von 90° versetzt ist.

9. Rekuperator (1) nach Anspruch 1, **dadurch gekennzeichnet, dass** die Trommel (8) kreiszylinderförmig ausgebildet und in einer Bohrung eines feststehenden Aufnahmeelements gelagert ist, wobei die in der Trommel (8) verlaufenden Gruppen (11, 12) von Kanälen über Öffnungspaare, die jeweils in der Mantelfläche der Trommel (8) und der diese umgebenden Wandfläche der Bohrung des Aufnahmeelements vorgesehen sind, mit Strömungsleitungen verbindbar sind, welche zu jeweils einem Anschluss des Rekuperators (1) führen.

10. Rekuperator (1) nach einem der vorherigen Ansprüche, **dadurch gekennzeichnet, dass** Steuermittel vorgesehen sind, durch die die Umschaltmittel in Abhängigkeit von einer vorgegebenen oder einstellbaren Zeitdauer betätigbar sind.

11. Rekuperator (1) nach einem der vorherigen Ansprüche, **dadurch gekennzeichnet, dass** Steuermittel oder Regelmittel vorgesehen sind, durch die die Umschaltmittel in Abhängigkeit von mindestens einem durch Messmittel erfassbaren Parameter betätigbar sind.

12. Rekuperator (1) nach einem der vorherigen Ansprüche, **dadurch gekennzeichnet, dass** dem ersten oder zweiten Anschluss (4, 5) ein erster Ventilator (20) zugeordnet ist, und dass dem dritten oder vierten Anschluss (6, 7) ein zweiter Ventilator (20) zugeordnet ist.

13. Rekuperator (1) nach Anspruch 12, **dadurch gekennzeichnet, dass** er als Bestandteil eines Lüftungssystems an einem Gebäude eingesetzt ist, wobei ein Ventilator (20) zwischen der Trommel (8) und dem Anschluss (4) des gebäudeseitigen Einlasses und der zweite Ventilator (20) zwischen der Trommel (8) und dem Anschluss (7) des gebäudeseitigen Auslasses angeordnet ist.

14. Verfahren zum Betrieb eines Rekuperators (1), der für die Übertragung von thermischer Energie von einem ersten Gasstrom (2) zu einem zweiten Gasstrom (3) mindestens vier Anschlüsse (4, 5, 6, 7) zum Zuführen und Abführen der beiden Gasströme (2, 3) sowie zwischen diesen Anschlüssen (4, 5, 6, 7) angeordnete Gruppen (11, 12) von Kanälen umfasst,
wobei die Gruppen (11, 12) von Kanälen zwischen den Anschlüssen (4, 5, 6, 7) intermittierend derart um eine gemeinsame Rotationsachse (9) gedreht werden, dass sie an beiden Seiten abwechselnd mit jeweils einem von mindestens zwei verschiedenen Anschlüssen (4, 7 - 6, 5) verbunden sind,
**dadurch gekennzeichnet,**
**dass** die erste Gruppe von Kanälen (11) und die zweite Gruppe von Kanälen (12) sich als zentraler Wärmetauscher (10) im Inneren der Trommel (8) befinden, wobei die Vielzahl der voneinander durch wärmeleitende Wände getrennten Kanäle der beiden Kanalgruppen (11) und (12) des zentralen Wärmetauschers (10) einander entgegengerichtet durchströmt werden.

## Claims

1. Recuperator (1) for the transfer of thermal energy from a first gas flow (2) to a second gas flow (3), comprising:
- at least one first connection (4), by which the first gas flow (2) can be fed to the recuperator (1),
- at least one second connection (5), by which the first gas flow (2) can be discharged from the recuperator (1),
- at least one third connection (6), by which the second gas flow (3) can be fed to the recuperator (1),
- at least one fourth connection (7), by which the second gas flow (3) can be discharged from the recuperator (1),
- a first group (11) of channels with two end regions (11a, 11b), wherein in a first operating position the first end region (11a) is connected to the first connection (4) and the second end region (11b) is connected to the second connection (5), and wherein in a second operating position the first end region (11a) is connected to the fourth connection (7) and the second end region (11b) is connected to the third connection (6),
- a second group (12) of channels with two end regions (12a, 12b), wherein in a first operating position the first end region (12a) is connected to the third connection (6) and the second end region (12b) is connected to the fourth connection (7), and wherein in a second operating position the first end region (12a) is connected to the second connection (5) and the second end position (12b) is connected to the first connection (4),
- at least one switching means, by which the groups (11, 12) of channels in each case can be switched from the first operating position to the second operating position or vice versa,
wherein the switching means comprise a drum (8) rotatably mounted about an axis of rotation (9), in which the first group of channels (11) and the second group of channels (12) extend,
wherein the drum (8) is rotatable into a first drum position (A), which corresponds to the first operating position of the groups of channels (11, 12),
and wherein the drum (8) is rotatable into a second drum position (B), which corresponds to the second operating position of the groups of channels (11, 12),
**characterised in that**
the first group of channels (11) and the second group of channels (12) are located as central heat exchanger (10) inside the drum (8), wherein the plurality of channels of the two channel groups (11) and (12) of the central heat exchanger (10), which channels are separated from each other by heat-conducting walls, can be flowed through in opposite directions.

2. Recuperator (1) according to claim 1, **characterised in that** the first drum position (A) is offset relative to the second drum position (B) by an angle of rotation of 180°.

3. Recuperator (1) according to claim 1 or 2, **characterised in that** the drum (8) has in each case at least two openings (19) in each end face (18), which openings in each case are connected to an end region (11a, 11b, 12a, 12b) of one of the two groups (11, 12) of channels.

4. Recuperator (1) according to claim 3, **characterised in that** the openings (19) arranged in the end faces (18) of the drum (8) in each case are connected via a collecting space (16) formed inside the drum (8) to an end region (11a, 11b, 12a, 12b) of a group (11, 12) of channels.

5. Recuperator (1) according to claim 3 or 4, **characterised in that** the drum (8) is mounted in the axial direction between two bearing elements (14) which are stationary relative to the recuperator (1) and is sealed against said bearing elements at the end face, wherein the bearing elements (14) in each case have two passage openings (15), which are connected via line elements to, in each case, one connection (4, 5, 6, 7) of the recuperator (1).

6. Recuperator (1) according to claim 5, **characterised in that** the at least two end-face openings (19) of the drum (8) and the two passage openings (15) of the two bearing elements (14) are at least largely aligned with one another in the two drum positions (A, B).

7. Recuperator (1) according to any of claims 3 to 6, **characterised in that** the end-face openings (19) of the drum (8) and the collecting spaces (16) connected thereto are divided by at least one dividing element (17) into in each case at least two partial regions, in such a manner that in each end face (18) in each case at least four openings (19) are formed.

8. Recuperator (1) according to claim 7, **characterised in that** the drum (8) can be adjusted into at least a third drum position (C), which is offset relative to the first and second drum position (A, B) in each case by an angle of rotation of 90°.

9. Recuperator (1) according to claim 1, **characterised in that** the drum (8) has a circular cylindrical design and is mounted in a borehole of a stationary receiving element, wherein the groups (11, 12) of channels extending in the drum (8) can be connected via pairs of openings, which are provided in each case in the lateral surface of the drum (8) and of the wall surface of the borehole of the receiving elements, which wall surface surrounds said drum, to flow lines, which lead to, in each case, one connection of the recuperator (1).

10. Recuperator (1) according to any of the preceding claims, **characterised in that** control means are provided, by which the switching means can be actuated depending on a predetermined or adjustable period of time.

11. Recuperator (1) according to any of the preceding claims, **characterised in that** control means or regulating means are provided, by which the switching means can be actuated depending on at least one parameter that is detectable by measuring means.

12. Recuperator (1) according to any of the preceding claims, **characterised in that** a first ventilating fan (20) is associated with the first or second connection (4, 5), and that a second ventilating fan (20) is associated with the third or fourth connection (6, 7).

13. Recuperator (1) according to claim 12, **characterised in that** it is used as a component of a ventilation system on a building, wherein a ventilating fan (20) is arranged between the drum (8) and the connection (4) of the building-side inlet and the second ventilating fan (20) is arranged between the drum (8) and the connection (7) of the building-side outlet.

14. Method for operating a recuperator (1), which comprises at least four connections (4, 5, 6,7) to supply and to discharge the two gas flows (2, 3) and groups (11, 12) of channels arranged between said connections (4, 5, 6, 7) for the transfer of thermal energy from a first gas flow (2) to a second gas flow (3),
wherein the groups (11, 12) of channels between the connections (4, 5, 6, 7) are rotated intermittently about a common axis of rotation (9) in such a manner that they are connected on both sides alternately to, in each case, one of at least two different connections (4, 7 - 6, 5),
**characterised in that**
the first group of channels (11) and the second group of channels (12) are located as central heat exchanger (10) inside the drum (8), wherein the plurality of channels of the two channel groups (11) and (12) of the central heat exchanger (10), which channels are separated from one another by heat-conducting walls, are flowed through in opposite directions.

## Revendications

1. Récupérateur (1) pour la transmission d'énergie thermique d'un premier flux de gaz (2) à un deuxième flux de gaz (3), comprenant :
- au moins un premier raccord (4), par lequel le premier flux de gaz (2) peut être amené au récupérateur (1),
- au moins un deuxième raccord (5), par lequel le premier flux de gaz (2) peut être évacué du récupérateur (1),
- au moins un troisième raccord (6), par lequel le deuxième flux de gaz (3) peut être amené au récupérateur (1),
- au moins un quatrième raccord (7), par lequel le deuxième flux de gaz (3) peut être évacué du récupérateur (1),
- un premier groupe (11) de canaux avec deux zones d'extrémité (11a, 11b), dans lequel dans une première position de service, la première zone d'extrémité (11a) est reliée au premier raccord (4) et la deuxième zone d'extrémité (11b) est reliée au deuxième raccord (5), et dans lequel dans une deuxième position de service, la première zone d'extrémité (11a) est reliée au quatrième raccord (7) et la deuxième zone d'extrémité (11b) est reliée au troisième raccord (6),
- un deuxième groupe (12) de canaux avec deux zones d'extrémité (12a, 12b), dans lequel dans une première position de service, la première zone d'extrémité (12a) est reliée au troisième raccord (6) et la deuxième zone d'extrémité (12b) est reliée au quatrième raccord (7), et dans lequel dans une deuxième position de service, la première zone d'extrémité (12a) est reliée au deuxième raccord (5) et la deuxième zone d'extrémité (12b) est reliée au premier raccord (4),
- au moins un moyen de commutation, par lequel les groupes (11, 12) de canaux sont commutables respectivement de la première position de service à la deuxième position de service ou inversement,
dans lequel les moyens de commutation comprennent un tambour (8) logé en rotation autour d'un axe de rotation (9), dans lequel le premier groupe de canaux (11) et le deuxième groupe de canaux (12) s'étendent,
dans lequel le tambour (8) est rotatif dans une première position de tambour (A), qui correspond à la première position de service des groupes de canaux (11, 12),
et dans lequel le tambour (8) est rotatif dans une deuxième position de tambour (B), qui correspond à la deuxième position de service des groupes de canaux (11, 12), **caractérisé en ce**
**que** le premier groupe de canaux (11) et le deuxième groupe de canaux (12) se trouvent en tant qu'échangeur thermique central (10) à l'intérieur du tambour (8), dans lequel la pluralité de canaux séparés les uns des autres par des parois conductrices de chaleur des deux groupes de canaux (11) et (12) de l'échangeur thermique central (10) peuvent être traversés en sens opposé l'un à l'autre.

2. Récupérateur (1) selon la revendication 1, **caractérisé en ce que** la première position de tambour (A) est décalée par rapport à la deuxième position de tambour (B) d'un angle de torsion de 180°.

3. Récupérateur (1) selon la revendication 1 ou 2, **caractérisé en ce que** le tambour (8) présente dans chaque côté frontal (18) respectivement au moins deux ouvertures (19), qui sont reliées respectivement à une zone d'extrémité (11a, 11b, 12a, 12b) d'un des deux groupes (11, 12) de canaux.

4. Récupérateur (1) selon la revendication 3, **caractérisé en ce que** les ouvertures (19) adjacentes dans les côtés frontaux (18) du tambour (8) sont reliées respectivement par le biais d'un espace de collecte (16) réalisé à l'intérieur du tambour (8) à une zone d'extrémité (11a, 11b, 12a, 12b) d'un groupe (11, 12) de canaux.

5. Récupérateur (1) selon la revendication 3 ou 4, **caractérisé en ce que** le tambour (8) est logé dans la direction axiale entre deux éléments de palier (14) fixes par rapport au récupérateur (1) et est rendu étanche côté frontal par rapport à ceux-ci, dans lequel les éléments de palier (14) présentent respectivement deux ouvertures de passage (15), qui sont reliées par le biais d'éléments de conduite à respectivement un raccord (4, 5, 6, 7) du récupérateur (1).

6. Récupérateur (1) selon la revendication 5, **caractérisé en ce que** les au moins deux ouvertures côté frontal (19) du tambour (8) et les deux ouvertures de passage (15) des deux éléments de palier (14) sont alignées au moins en grande partie l'une par rapport à l'autre dans les deux positions de tambour (A, B).

7. Récupérateur (1) selon l'une quelconque des revendications 3 à 6, **caractérisé en ce que** les ouvertures côté frontal (19) du tambour (8) et les espaces de collecte (16) qui y sont reliés sont subdivisés par au moins un élément de séparation (17) en respectivement au moins deux zones partielles de sorte que respectivement au moins quatre ouvertures (19) sont réalisées dans chaque côté frontal (18).

8. Récupérateur (1) selon la revendication 7, **caractérisé en ce que** le tambour (8) est réglable dans au moins une troisième position de tambour (C), qui est décalée respectivement d'un angle de torsion de 90° par rapport à la première et à la deuxième position de tambour (A, B).

9. Récupérateur (1) selon la revendication 1, **caractérisé en ce que** le tambour (8) est réalisé en forme de cylindre circulaire et est logé dans un perçage d'un élément de logement fixe, dans lequel les groupes (11, 12) de canaux s'étendant dans le tambour (8) peuvent être reliés par le biais de paires d'ouverture, qui sont prévues respectivement dans la surface d'enveloppe du tambour (8) et la surface de paroi l'entourant du perçage de l'élément de logement, à des conduites d'écoulement, lesquelles conduisent à respectivement un raccordement du récupérateur (1).

10. Récupérateur (1) selon l'une quelconque des revendications précédentes, **caractérisé en ce que** des moyens de commande sont prévus, par lesquels les moyens de commutation sont actionnables en fonction d'une durée prédéfinie ou réglable.

11. Récupérateur (1) selon l'une quelconque des revendications précédentes, **caractérisé en ce que** des moyens de commande ou des moyens de régulation sont prévus, par lesquels les moyens de commutation sont actionnables en fonction d'au moins un paramètre détectable par des moyens de mesure.

12. Récupérateur (1) selon l'une quelconque des revendications précédentes, **caractérisé en ce qu'**un premier ventilateur (20) est associé au premier ou deuxième raccord (4, 5), et qu'un deuxième ventilateur (20) est associé au troisième ou quatrième raccord (6, 7).

13. Récupérateur (1) selon la revendication 12, **caractérisé en ce qu'**il est utilisé en tant qu'élément intégrant d'un système de ventilation au niveau d'un bâtiment, dans lequel un ventilateur (20) est agencé entre le tambour (8) et le raccord (4) de l'entrée côté bâtiment et le deuxième ventilateur (20) est agencé entre le tambour (8) et le raccord (7) de la sortie côté bâtiment.

14. Procédé de fonctionnement d'un récupérateur (1), qui pour la transmission d'énergie thermique d'un premier flux de gaz (2) à un deuxième flux de gaz (3) comprend au moins quatre raccords (4, 5, 6, 7) pour l'amenée et l'évacuation des deux flux de gaz (2, 3) ainsi que des groupes (11, 12) de canaux agencés entre ces raccords (4, 5, 6, 7),
dans lequel les groupes (11, 12) de canaux sont mis en rotation autour d'un axe de rotation commun (9) de manière intermittente entre les raccords (4, 5, 6, 7) de sorte qu'ils sont reliés aux deux côtés en alternance à respectivement un d'au moins deux raccords (4, 7 - 6, 5) différents,
**caractérisé en ce**
**que** le premier groupe de canaux (11) et le deuxième groupe de canaux (12) se trouvent en tant qu'échangeur thermique central (10) à l'intérieur du tambour (8), dans lequel la pluralité de canaux séparés les uns des autres par des parois conductrices de chaleur des deux groupes de canaux (11) et (12) de l'échangeur thermique central (10) peuvent être traversés en sens opposé l'un à l'autre.
